(19) Europäisches Patentamt
European Patent Office
Office européen des brevets

(11) **EP 3 401 442 B1**

(12) **EUROPÄISCHE PATENTSCHRIFT**

(45) Veröffentlichungstag und Bekanntmachung des Hinweises auf die Patenterteilung:
**18.12.2019  Patentblatt 2019/51**

(51) Int Cl.:
***E01C 19/48*** *(2006.01)*

(21) Anmeldenummer: **17170604.7**

(22) Anmeldetag: **11.05.2017**

(54) **STRASSENFERTIGER MIT LENKKOMPENSATION UND STEUERVERFAHREN**

ROAD FINISHER WITH STEERING COMPENSATION AND CONTROL METHOD

FINISSEUSE DE ROUTE AYANT UNE COMPENSATION DE BRAQUAGE ET PROCÉDÉ DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.11.2018  Patentblatt 2018/46**

(73) Patentinhaber: **Joseph Vögele AG**
**67067 Ludwigshafen (DE)**

(72) Erfinder: **BUSCHMANN, Martin**
**67435 Neustadt (DE)**

(74) Vertreter: **Grünecker Patent- und Rechtsanwälte PartG mbB**
**Leopoldstraße 4**
**80802 München (DE)**

(56) Entgegenhaltungen:
**EP-A1- 0 620 319      EP-A1- 1 990 472**
**EP-A1- 2 620 549      JP-A- H06 294 106**
**JP-A- 2009 121 192**

## Beschreibung

Die vorliegende Erfindung betrifft Straßenfertiger mit einer Einbaubohle zum Verdichten von Einbaugut sowie Verfahren zum Steuern solcher Straßenfertiger.

Bekannte Straßenfertiger umfassen bzgl. einer Einbaufahrtrichtung vorne am Straßenfertiger einen Gutbunker zur Aufnahme von Einbaugut. Von dem Gutbunker wird das Einbaugut während des Einbaus über geeignete Fördereinrichtungen einer hinter dem Straßenfertiger hergezogenen Einbaubohle zum Verdichten des Einbauguts vorgelegt. Es sind Einbaubohlen bekannt, die beidseitig mit seitlichen Auszieheilen versehen sind. Durch seitliches Ausfahren oder Einfahren der Auszieheile senkrecht zur Einbaufahrtrichtung des Straßenfertigers lässt sich die von der Einbaubohle abgedeckte Einbaubreite an die Geometrie der einzubauenden Fahrbahn anpassen. Die Steuerung der Arbeitsbreite der Einbaubohle erfolgt zumeist manuell durch einen Bohlenbediener auf der linken bzw. rechten Seite der Einbaubohle durch Ausfahren oder Einziehen des Auszieheils für die jeweilige Seite.

Beim Fahren einer Kurve mit dem Straßenfertiger während einer Einbaufahrt rotiert der Straßenfertiger um eine senkrecht stehende Gierachse (Gierbewegung). Diese Gierachse liegt bei Straßenfertigern mit einem Kettenfahrwerk etwa im Schwerpunkt des Straßenfertigers und bei Straßenfertigern mit einem Radfahrwerk zwischen den ungelenkten Rädern der Hinterachse, also in beiden Fällen bzgl. der Einbaufahrtrichtung vor der Einbaubohle. Da die Einbaubohle und deren Auszieheile bzgl. der Einbaufahrtrichtung hinter der Gierachse liegen, schwenken beide bei der Kurvenfahrt zusammen aus. Insbesondere verschwenkt ein seitlich äußerster hinterer Punkt eines kurveninnenseitigen Auszieheils der Einbaubohle von einer kurveninnenseitigen Kante des Sollfahrbahnverlaufs in Richtung auf die kurvenaußenseitige Fahrbahnkante. Dies führt zu einem Absatz in der Fahrbahnkante auf der Kurveninnenseite. In der Praxis wird dieser Absatz von einem Bediener manuell durch Anpassen (Ausfahren) einer seitlichen Ausfahrposition des kurveninnenseitigen Auszieheils der Einbaubohle zum Ausgleichen des Versatzes der Einbaubohle ausgesteuert. Dies erfordert die Aufmerksamkeit des Bedieners, welcher insbesondere bei einer Kurvenfahrt des Straßenfertigers auch noch andere Aufgaben zu erfüllen hat, wie beispielsweise ein Einweisen des Fahrzeugführers. Da der Bediener den Absatz in der Fahrbahnkante erst dann manuell aussteuern kann, wenn der Versatz der Einbaubohle bereits eingetreten ist, bleibt auch bei einem geübten Bediener immer ein Absatz und damit ein Mangel in der Fahrbahn bestehen. Auch kurvenaußenseitig tritt ein Versatz der Einbauhohle auf, hier bezüglich der einzubauenden Fahrbahn nach außen. In der Regel ist es dem Bediener nicht möglich, die Ausfahrpositionen der Auszieheile der Einbaubohle auf beiden Seiten schnell und genau einzustellen.

Aus der EP 3 106 562 A1 ist ein Straßenfertiger bekannt, welcher mit einem Sensor ausgestattet ist, der eine Linie am Boden detektiert, entlang der der Fahrbahnbelag eingebaut werden soll. Basierend auf einem Messsignal des Sensors wird ein Abstand zwischen der Linie und einem Seitenschild der Einbaubohle bestimmt. Dieser Abstand wird dazu verwendet, eine Ausfahrposition des Seitenschildes relativ zu der Linie anzupassen. Bei der detektierten Linie kann es sich beispielsweise um eine Kante eines zu verbreiternden Fahrbahnabschnitts oder einen aufgespannten Leitdraht handeln. Nachteilig an diesem System ist, dass vor Einbaubeginn sichergestellt werden muss, dass die Referenzlinie, welcher der Seitenschild der Einbaubohle folgt, dem gewünschten Einbauverlauf entspricht, oder aufwendig ein Leitdraht aufgespannt werden muss.

Auch die EP 0 620 319 B1 offenbart das Anpassen einer Ausfahrposition eines seitlichen Auszieheils einer Einbaubohle anhand eines gemessenen Abstands zu einer Referenzlinie am Boden. Bei diesem System sind zwei entlang der Einbaufahrtrichtung des Straßenfertigers voneinander beabstandete Sensoren am Auszieheil der Einbaubohle vorgesehen, welche jeweils den Abstand zu der Referenzlinie detektieren. Abhängig davon, ob gerade ein sich verengender, ein sich verbreitender Bereich oder ein Bereich konstanter Breite der Fahrbahn eingebaut wird, wird entweder der von dem hinteren Sensor oder dem vorderen Sensor gemessene Abstand zu der Referenzlinie für das Einstellen der Ausfahrposition des Auszieheils der Einbaubohle herangezogen. So soll die Ausfahrposition des Auszieheils besser an den Fahrbahnverlauf angepasst werden. Auch bei diesem System ist das Vorliegen einer deutlich detektierbaren und dem gewünschten Einbauverlauf folgenden Referenzlinie notwendig.

Es ist Aufgabe der Erfindung, ein Verfahren zum Betrieb eines Straßenfertigers und einen Straßenfertiger bereit zu stellen, mit welchen sich negative Auswirkungen einer Gierbewegung der Einbaubohle auf die Fahrbahnqualität oder den Einbauablauf bei einer Kurvenfahrt des Straßenfertigers ohne großen Bedienaufwand weitgehend vermeiden lassen, insbesondere ohne dass eine externe Referenzlinie entlang des geplanten Fahrbahnverlaufs vorliegen muss.

Diese Aufgabe wird durch den Gegenstand der Ansprüche 1 und 9 gelöst. Die abhängigen Ansprüche geben vorteilhafte Ausführungsformen der Erfindung an.

Ein erfindungsgemäßes Verfahren zum Betrieb eines Straßenfertigers umfasst das Einbauen eines Fahrbahnbelags mit dem Straßenfertiger entlang eines Planums. Dabei wird eine Einbaubohle des Straßenfertigers zum Verdichten des Fahrbahnbelags entlang einer Einbaufahrtrichtung über das Planum gezogen. Insbesondere kann die Einbaubohle mittels Zugholmen beidseitig an dem Straßenfertiger angelenkt sein und während des Einbaus schwimmend von dem zu verdichtenden Einbaumaterial getragen werden.

Mittels einer Kurvenkorrektureinheit des Straßenfertigers wird ein einen tatsächlichen Lenkwinkel des Straßenfertigers definierender Wert ermittelt. Aus diesem Wert lässt sich der Lenkwinkel des Straßenfertigers unter Berücksichtigung bekannter Parameter des Straßenfertigers ermitteln, insbesondere eindeutig ermitteln. Basierend auf dem den tatsächlichen Lenkwinkel des Straßenfertigers definierenden, ermittelten Wert wird mittels der Kurvenkorrektureinheit des Straßenfertigers ein erwarteter Versatz der Einbaubohle berechnet, welcher aufgrund einer Gierbewegung des Straßenfertigers beim Lenken mit dem von dem ermittelten Wert definierten Lenkwinkel vorliegt. Basierend auf dem berechneten, erwarteten Versatz der Einbaubohle wird mittels der Kurvenkorrektureinheit des Straßenfertigers eine seitliche Ausfahrposition zumindest eines seitlichen Ausziehteils der Einbaubohle automatisch derart korrigiert, dass der Versatz der Einbaubohle ausgeglichen wird.

Erfindungsgemäß wird der Versatz der Einbaubohle basierend auf dem den tatsächlichen Lenkwinkel des Straßenfertigers definierenden Wert berechnet und automatisch korrigiert. Für die erforderlichen Berechnungen kann auf die bekannte Maschinengeometrie des Straßenfertigers zurückgegriffen werden. Ein Bediener an der Einbaubohle muss sich während einer Kurvenfahrt des Straßenfertigers nicht mehr um die manuelle Kurvenkorrektur der seitlichen Ausfahrposition des Ausziehteils der Einbaubohle kümmern, sondern ist für andere Aufgaben frei und kann beispielsweise den Fahrzeugführer einweisen. Der Versatz der Einbaubohle wird mit dem erfindungsgemäßen Verfahren besonders genau ausgeglichen, da eine angemessene Anpassung der Ausfahrposition optimal auf den Lenkwinkel abgestimmt berechnet werden kann und nicht von einem Bediener "nach Gefühl" angepasst werden muss. Das erfindungsgemäße Verfahren ist nicht von dem Vorliegen einer externen Referenz, wie beispielsweise einer bereits vorhandenen Fahrbahnkante oder einem Leitdraht, abhängig und damit universell einsetzbar.

Im Fall eines Straßenfertigers mit Radfahrwerk kann der den tatsächlichen Lenkwinkel des Straßenfertigers definierende Wert beispielsweise ein Lenkwinkel eines oder mehrerer lenkender Räder, insbesondere lenkender Vorderräder, des Straßenfertigers sein. Insbesondere kann der Lenkwinkel eines ausgewählten lenkenden Rads des Straßenfertigers oder ein Mittelwert der Lenkwinkel sämtlicher oder aller lenkender Räder des Straßenfertigers herangezogen werden. Für einen Straßenfertiger mit Radfahrwerk könnte alternativ auch eine Differenz zwischen einer Geschwindigkeit eines bezüglich der Einbaufahrtrichtung linken Rads des Straßenfertigers und einer Geschwindigkeit eines bezüglich der Einbaufahrtrichtung rechten Rads des Straßenfertigers als der den tatsächlichen Lenkwinkel des Straßenfertigers definierende Wert herangezogen werden.

Es ist aber auch denkbar, stattdessen eine Differenz zwischen einem in einem Zeitraum von einem bezüglich der Einbaufahrtrichtung linken Rad des Straßenfertigers zurückgelegten Weg und einem in dem Zeitraum von einem bezüglich der Einbaufahrtrichtung rechten Rad des Straßenfertigers zurückgelegten Weg als den den tatsächlichen Lenkwinkel des Straßenfertigers definierenden Wert heranzuziehen.

Handelt es sich bei dem Straßenfertiger um einen Straßenfertiger mit Kettenfahrwerk, kann beispielsweise eine Differenz zwischen einer Geschwindigkeit einer bzgl. der Einbaufahrtrichtung linken Fahrkette des Straßenfertigers und einer Geschwindigkeit einer bzgl. der Einbaufahrtrichtung rechten Fahrkette des Straßenfertigers als der den tatsächlichen Lenkwinkel des Straßenfertigers definierende Wert herangezogen werden.

Es ist aber auch denkbar, stattdessen eine Differenz zwischen einem in einem Zeitraum von einer bezüglich der Einbaufahrtrichtung linken Fahrkette des Straßenfertigers zurückgelegten Weg und einem in dem Zeitraum von einer bezüglich der Einbaufahrtrichtung rechten Fahrkette des Straßenfertigers zurückgelegten Weg als den den tatsächlichen Lenkwinkel des Straßenfertigers definierenden Wert heranzuziehen.

Der Lenkwinkel eines oder mehrerer lenkender Räder des Straßenfertigers, die Geschwindigkeitsdifferenz zwischen einem rechten und linken Antriebsmittel des Straßenfertigers und die Differenz zwischen den von einem rechten und linken Antriebsmittel in einem Zeitraum zurückgelegten Wegen sind äußerst zuverlässige Indikatoren für den tatsächlichen Lenkwinkel des Straßenfertigers und sind daher eine verlässliche Ausgangsbasis für eine Berechnung einer angemessenen Korrektur der Ausfahrposition des zumindest einen seitlichen Ausziehteils der Einbaubohle. Zudem können diese Werte einfach ermittelt werden und liegen optimalerweise bereits ohnehin für andere Zwecke vor.

Es wäre aber auch denkbar, eine andere Größe als den den tatsächlichen Lenkwinkel des Straßenfertigers definierenden Wert zu verwenden, beispielsweise eine eingestellte Lenkradposition (Lenkradstellung) des Straßenfertigers.

Der den tatsächlichen Lenkwinkel des Straßenfertigers definierende Wert kann mit einer Sensoreinheit des Straßenfertigers gemessen oder aus einem mit einer Sensoreinheit des Straßenfertigers gemessen Messwert berechnet werden. Hierdurch kann sichergestellt werden, dass der den tatsächlichen Lenkwinkel des Straßenfertigers definierende Wert auch die tatsächliche Situation am Straßenfertiger angibt.

Beispielsweise kann die Sensoreinheit einen Lenkwinkelsensor zum Bestimmen eines Lenkwinkels eines lenkenden Rads des Straßenfertigers aufweisen. Die Sensoreinheit könnte auch Umdrehungssensoren zum Bestimmen einer Geschwindigkeit eines bzgl. der Einbaufahrtrichtung linken Rads des Straßenfertigers und einer Geschwindigkeit eines bzgl. der Einbaufahrtrichtung des Straßenfertigers rechten Rads des Straßenfertigers aufweisen. Die Differenz der gemessenen Geschwindigkeiten der beiden Räder kann als der den tatsächlichen Lenkwinkel des Straßenfertigers definierende Wert herangezogen werden. Auch denkbar ist, dass die Sensoreinheit ein Wegmesssystem zum Bestimmen eines in einem Zeitraum von einem bezüglich der Einbaufahrtrichtung linken Rad des Straßenfertigers zurückgelegten Wegs und eines in dem Zeitraum von einem bezüglich der Einbaufahrtrichtung rechten Rad des Straßenfertigers zurückgelegten Wegs umfasst. Die Differenz der gemessenen Wege kann als der den tatsächlichen Lenkwinkel des Straßenfertigers definierende Wert herangezogen werden.

Alternativ kann die Sensoreinheit Umdrehungssensoren zum Bestimmen einer Geschwindigkeit einer bzgl. der Einbaufahrtrichtung linken Fahrkette des Straßenfertigers und einer Geschwindigkeit einer bzgl. der Einbaufahrtrichtung des Straßenfertigers rechten Fahrkette des Straßenfertigers aufweisen. Die Differenz der gemessenen Geschwindigkeiten der beiden Fahrketten kann als der den tatsächlichen Lenkwinkel des Straßenfertigers definierende Wert herangezogen werden. Auch denkbar ist, dass die Sensoreinheit ein Wegmesssystem zum Bestimmen eines in einem Zeitraum von einer bezüglich der Einbaufahrtrichtung linken Fahrkette des Straßenfertigers zurückgelegten Wegs und eines in dem Zeitraum von einer bezüglich der Einbaufahrtrichtung rechten Fahrkette des Straßenfertigers zurückgelegten Wegs umfasst. Die Differenz der gemessenen Wege kann als der den tatsächlichen Lenkwinkel des Straßenfertigers definierende Wert herangezogen werden.

Der den tatsächlichen Lenkwinkel des Straßenfertigers definierende Wert kann auch aus einer Benutzereingabe zum Steuern des Straßenfertigers oder aus einem Steuersignal zum Steuern eines Fahrwerks des Straßenfertigers erhalten werden.

Beispielsweise kann eine von dem Fertigerfahrer ohnehin einzustellende Lenkradposition (Lenkradstellung) als der den tatsächlichen Lenkwinkel des Straßenfertigers definierende Wert herangezogen werden. Zur Lenkung des Straßenfertigers muss die Lenkradposition ohnehin von dem Straßenfertiger verarbeitet werden, so dass keine zusätzlichen Vorkehrungen zum Bestimmen der Lenkradposition getroffen werden müssen.

Beispielsweise könnte aber auch ein Steuersignal zum Einstellen eines Lenkwinkels eines lenkenden Rads des Straßenfertigers außer dem entsprechenden Lenkaktuator auch der Kurvenkorrektureinheit des Straßenfertigers zugeführt werden, welche darauf basierend die Ausfahrposition des seitlichen Ausziehteils während einer Kurvenfahrt korrigiert. Gemäß einer solchen Ausführungsform ist es nicht erforderlich, zum Bestimmen des den tatsächlichen Lenkwinkel des Straßenfertigers definierenden Werts eine zusätzliche Sensoreinheit am Straßenfertiger vorzusehen.

Es wäre auch denkbar, dass der den tatsächlichen Lenkwinkel des Straßenfertigers definierende Wert direkt per Benutzereingabe eingegeben wird. Insbesondere kann der Lenkwinkel des Straßenfertigers selbst von einem Benutzer eingegeben werden.

Vorzugsweise wird bei einer Kurvenfahrt zumindest die seitliche Ausfahrposition eines kurveninnenseitigen oder kurvenaußenseitigen seitlichen Ausziehteils der Einbaubohle basierend auf dem erwarteten Versatz der Einbaubohle korrigiert.

Die Korrektur der Ausfahrposition des kurveninnenseitigen Auszehteils ist besonders wichtig, da ein hinterster, seitlich äußerster Punkt des kurveninnenseitigen Ausziehteils aufgrund der Gierbewegung des Straßenfertigers bei der Kurvenfahrt einen Versatz in Richtung auf die kurvenaußenseitige Fahrbahnkante hin erfährt und so der einzubauende Fahrbahnbelag ohne Korrektur nicht bis zu einer kurveninnenseitigen Sollkante eingebaut und/oder von der Einbaubohle verdichtet würde. Alternativ oder zusätzlich kann aber auch die Ausfahrposition eines kurvenaußenseitigen Ausziehteils der Einbaubohle basierend auf dem berechneten erwarteten Versatz der Einbaubohle korrigiert werden. Vorzugsweise wird basierend auf dem erwarteten Versatz sowohl eine seitliche Ausfahrposition eines bezüglich der Einbaufahrtrichtung des Straßenfertigers rechten Ausziehteils der Einbaubohle als auch eine seitliche Ausfahrposition eines bezüglich der Einbaufahrtrichtung des Straßenfertigers linken Ausziehteils der Einbaubohle korrigiert, um beidseitig eine optimale Anpassung an die Kurvenfahrt zu erhalten.

Vorzugsweise gleichen sich die Korrektur der seitlichen Ausfahrposition des rechten Ausziehteils und die Korrektur der seitlichen Ausfahrposition des linken Ausziehteils derart zur Null aus, dass eine Gesamtbreite der Einbaubohle konstant bleibt. So kann eine uniforme Fahrbahnbreite erreicht werden. Eine Berechnung der Korrektur der Ausfahrposition muss in diesem Fall lediglich für eines der seitlichen Ausziehteile der Einbaubohle durchgeführt werden und kann auch zum komplementären Korrigieren des anderen Ausziehteils verwendet werden.

Das Ermitteln des den tatsächlichen Lenkwinkel des Straßenfertigers definierenden Werts, das Berechnen des erwarteten Versatzes und das Korrigieren der seitlichen Ausfahrposition des zumindest einen seitlichen Ausziehteils der Einbaubohle kann in regelmäßigen zeitlichen Intervallen durchgeführt werden, um jederzeit auf eine Änderung des Lenkwinkels des Straßenfertigers reagieren zu können. Der zeitliche Abstand zwischen zwei aufeinanderfolgenden Intervalldurchläufen kann dabei beispielsweise weniger als 1 s, weniger als 10 s, weniger als 20 s oder weniger als 30 s betragen. Angesichts der langsamen Einbaugeschwindigkeit von Straßenfertigern von wenigen Metern pro Minute kann damit eine beinahe instantane Reaktion auf einen geänderten Lenkwinkel erreicht werden.

Erfindungsgemäß wird auch ein Straßenfertiger bereitgestellt. Dieser ist zum Durchführen des beschriebenen erfindungsgemäßen Verfahrens konfiguriert, ausgelegt und geeignet. Im Hinblick auf das Verfahren beschriebene Merkmale können entsprechend auf den Straßenfertiger übertragen werden und umgekehrt.

Ein erfindungsgemäßer Straßenfertiger umfasst einen bezüglich einer Einbaufahrtrichtung des Straßenfertigers vorne am Straßenfertiger gelegenen Gutbunker zur Aufnahme von Einbaugut. Zudem umfasst der Straßenfertiger eine bezüglich der Einbaufahrtrichtung hinten am Straßenfertiger vorgesehene Einbaubohle zum Verdichten von Einbaugut. Die Einbaubohle umfasst zumindest ein seitliches Ausziehteil. Vorzugsweise umfasst die Einbaubohle ein bezüglich der Einbaufahrtrichtung des Straßenfertigers rechtes Ausziehteil und ein bezüglich der Einbaufahrtrichtung des Straßenfertigers linkes Ausziehteil.

Der erfindungsgemäße Straßenfertiger umfasst des Weiteren eine Kurvenkorrektureinheit. Die Kurvenkorrektureinheit ist dazu konfiguriert, einen einen tatsächlichen Lenkwinkel des Straßenfertigers definierenden Wert zu ermitteln. Zudem ist die Kurvenkorrektureinheit dazu konfiguriert, einen erwarteten Versatz der Einbaubohle, welcher aufgrund einer Gierbewegung des Straßenfertigers beim Lenken mit dem von dem ermittelten Wert definierten Lenkwinkel vorliegt, basierend auf dem ermittelten Wert zu berechnen. Die Kurvenkorrektureinheit ist des Weiteren dazu konfiguriert, eine seitliche Ausfahrposition des zumindest einen seitlichen Ausziehteils der Einbaubohle basierend auf dem berechneten erwarteten Versatz automatisch zu korrigieren, sodass der Versatz ausgeglichen wird.

Vorteilhafte Ausführungsformen des erfindungsgemäßen Straßenfertigers ergeben sich anhand der oben in Bezug auf das Verfahren diskutierten Merkmale.

Im Folgenden wird die Erfindung anhand von Ausführungsbeispielen mit Bezug auf die Figuren erläutert. Dabei zeigen:

Fig. 1    eine schematische Seitenansicht eines erfindungsgemäßen Straßenfertigers in einer Ausführungsform mit Kettenfahrwerk;

Fig. 2    eine schematische Seitenansicht eines erfindungsgemäßen Straßenfertigers in einer Ausführungsform mit Räderfahrwerk; und

Fig. 3    eine schematische Draufsicht auf einen Straßenfertiger in zwei zeitlich aufeinan-der folgenden Positionen beim Einbau einer Fahrbahnkurve zur Illustration der Korrektur des seitlichen Versatzes der Einbaubohle.

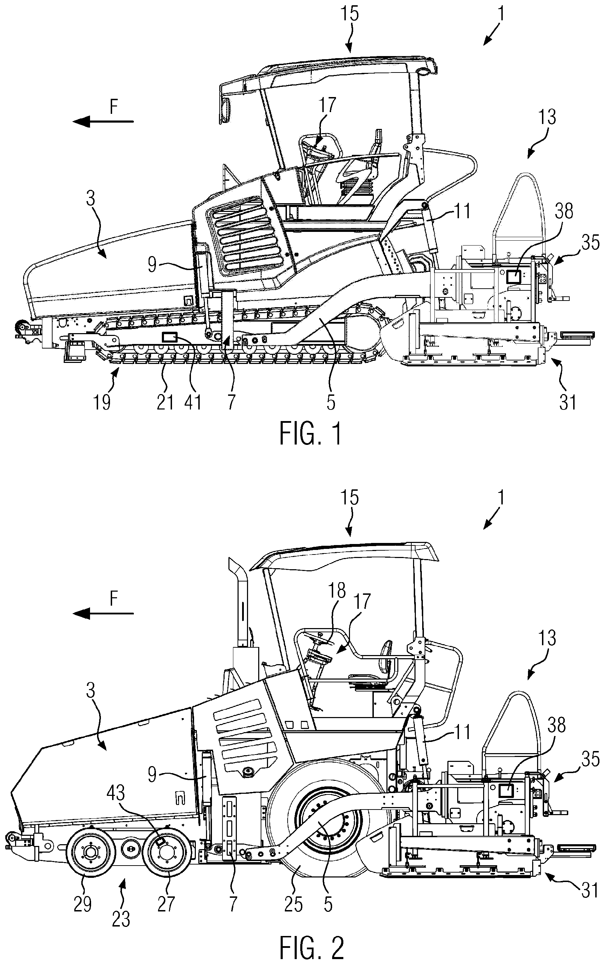

Die Figuren 1 und 2 zeigen jeweils einen erfindungsgemäßen Straßenfertiger 1 gemäß einer Ausführungsform in schematischer Seitenansicht. In Einbaufahrtrichtung F vorne weist der Straßenfertiger 1 einen Gutbunker 3 zur Aufnahme von Einbaugut auf. An dem Straßenfertiger 1 ist auf bezüglich der Einbaufahrtrichtung F beiden lateralen Seiten des Straßenfertigers 1 jeweils ein Zugarm 5 über einen höhenverstellbaren Anlenkpunkt 7 gehalten. Der Anlenkpunkt 7 ist mittels eines Anlenk-Hydraulikzylinders 9 an dem Straßenfertiger 1 höhenverstellbar. An einer Hinterseite des Straßenfertigers 1 sind die Zugarme 5 jeweils wieder beidseitig über höhenverstellbare hintere Hydraulikzylinder 11 an dem Straßenfertiger 1 angebracht. An dem bezüglich der Einbaufahrtrichtung F hinteren Enden der Zugarme 5 ist eine Einbaubohle 13 zum Verdichten von Einbaugut aufgehängt. Während des Einbaus wird die Einbaubohle 13 von den Zugarmen 5 auf dem Einbaugut schwimmend hinter dem Straßenfertiger 1 hergezogen. Ein Bedienstand 15 des Straßenfertigers 1 bietet Platz für eine Bedienperson und umfasst Bedieneinheiten 17, mittels derer Eingaben zur Steuerung des Straßenfertigers 1 getätigt werden können.

Der Straßenfertiger 1 gemäß der in Figur 1 gezeigten Ausführungsform umfasst ein Kettenfahrwerk 19 mit jeweils einer Fahrkette 21 auf der bezüglich der Einbaufahrtrichtung F linken und rechten Seite des Straßenfertigers 1. In Figur 1 ist lediglich die linke Fahrkette 21 sichtbar.

In der alternativen Ausführungsform gemäß Figur 2 umfasst der Straßenfertiger 1 anstelle des Kettenfahrwerks 19 ein Räderfahrwerk 23. Dieses umfasst ein Paar nicht gelenkter Hinterräder 25 sowie ein Paar gelenkter Vorderräder 27. In der dargestellten Ausführungsform ist noch ein zweites Paar Vorderräder 29 vorgesehen, welches gelenkt oder nicht gelenkt sein kann.

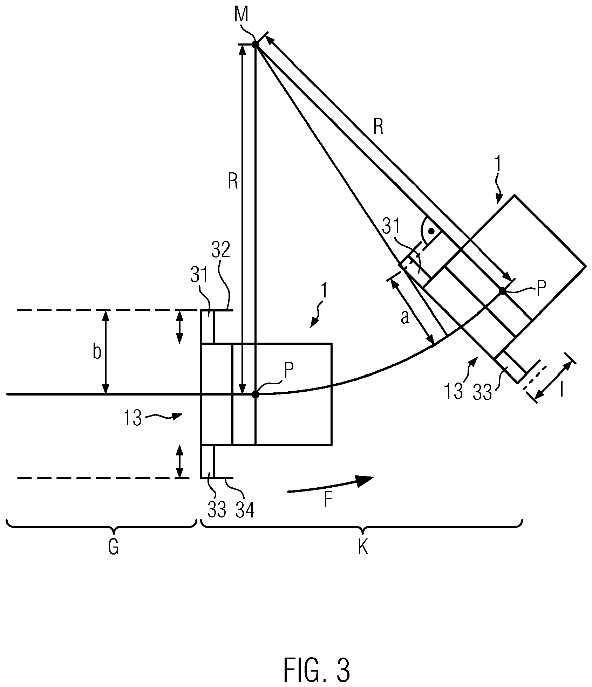

Die Einbaubohle 13 der Straßenfertiger 1 beider Ausführungsformen umfasst bezüglich der Einbaufahrtrichtung F zu beiden Seiten je ein seitliches Ausziehteil 31, 33. Die Ausziehteile 31, 33 weisen vorzugsweise an ihren seitlich äußeren Enden jeweils ein Seitenschild 32, 34 zum seitlichen Begrenzen der Einbaubreite auf. In den Figuren 1 und 2 ist jeweils nur das bezüglich der Einbaufahrtrichtung F linke Ausziehteil 31 sichtbar. Die Straßenfertiger 1 gemäß den gezeigten Ausführungsformen umfassen auf der bezüglich der Einbaufahrtrichtung F rechten Seite aber auch ein insbesondere analog ausgebildetes rechtes Ausziehteil 33 (siehe Figur 3). Die seitlichen Ausziehteile 31, 33 können über an der Einbaubohle 13 vorgesehene Aktuatoren nach links bzw. rechts ausgefahren und eingezogen werden, um eine Einbaubreite des Straßenfertigers 1 zu variieren. Die Ausfahrpositionen der Ausziehteile 31, 33 können von einer an der Einbaubohle 13 befindlichen Bedienperson über Eingabeelemente an einem Bohlenbedienstand 35 eingestellt werden, um beispielsweise beim Einbau einen Übergang zwischen Fahrbahnbereichen unterschiedlicher Breite zu realisieren. Vorzugsweise umfassen die Ausziehteile 31, 33, ebenso wie der nicht ausfahrbare Teil der Einbaubohle 13 Verdichtungselemente zum Verdichten von Einbaugut, wie z. B. eine Pressleiste und/oder Vibrationseinrichtungen.

Figur 3 zeigt einen Straßenfertiger 1 beim Einbauen eines Fahrbahnbelags entlang eines Planums in schematischer Draufsicht in zwei zeitlich aufeinanderfolgenden Positionen. Bei dem Straßenfertiger 1 kann es sich um einen Straßenfertiger 1 der in Figur 1 oder 2 gezeigten Art handeln. Die in Figur 3 linke Darstellung des Straßenfertigers 1 zeigt den Straßenfertiger 1 in einer Einbausituation, in der er gerade einen geradlinigen Abschnitt G des Fahrbahnbelags eingebaut hat und im Begriff ist, in eine Kurvenfahrt zum Einbau eines sich an den geradlinigen Abschnitt G anschließenden Kurvenabschnitts K überzugehen. In dem dargestellten Beispiel führt der Straßenfertiger 1 nach Einbau des geradlinigen Abschnitts G eine Kurvenfahrt mit dem konstanten Kurvenradius R und dem Kurvenmittelpunkt M aus. Die in Figur 3 rechte Darstellung des Straßenfertigers 1 zeigt diesen während des Durchführens der Kurvenfahrt zu einem gegenüber der linken Darstellung späteren Zeitpunkt. Für die Kurvenfahrt kann der Straßenfertiger 1 von einem Fertigerfahrer mittels entsprechender Bedieneinheiten 17, wie beispielsweise einem Lenkrad 18, im Bedienstand 15 gelenkt werden. Im Falle des Straßenfertigers 1 mit Kettenfahrwerk 19 kann ein bestimmter Lenkwinkel des Straßenfertigers 1 und damit ein Kurvenradius R insbesondere durch Einstellen einer Differenzgeschwindigkeit der Fahrketten 21 (linke und rechte Fahrkette 21) des Straßenfertigers 1 eingestellt werden. Bei einem Straßenfertiger 1 mit Räderfahrwerk 23 kann ein Lenkwinkel des Straßenfertigers 1 und damit ein Kurvenradius R insbesondere durch Einstellen eines Lenkwinkels der gelenkten Räder 27 des Straßenfertigers 1 eingestellt werden.

Wird der Straßenfertiger 1 zum Fahren einer Kurve gelenkt, führt der Straßenfertiger 1 eine Gierbewegung um eine senkrecht stehende Achse durch, welche durch einen fahrzeugfesten Gierpunkt P des Straßenfertigers 1 geht. Der Gierpunkt P liegt bei einem Straßenfertiger 1 mit Kettenfahrwerk 19 in etwa im Schwerpunkt des Straßenfertigers 1 und bei einem Straßenfertiger 1 mit Radfahrwerk 23 zwischen den ungelenkten Rädern 25 der Hinterachse. Da sich die Einbaubohle 13 in beiden Fällen hinter dem Gierpunkt P befindet, schwenkt diese bei einer Kurvenfahrt aus. Ein kurveninnenseitig äußerster und bezüglich der Einbaufahrtrichtung F hinterster Punkt der Einbaubohle 13 erfährt aufgrund der Gierbewegung des Straßenfertigers 1 bei der Kurvenfahrt einen Versatz in Richtung auf die Kurvenaußenseite hin, also bezüglich der Fahrbahn nach innen. Ein kurvenaußenseitig äußerster und bezüglich der Einbaufahrtrichtung F des Straßenfertigers 1 hinterster Punkt der Einbaubohle 13 erfährt durch die Gierbewegung des Straßenfertigers 1 dagegen einen Versatz von der Kurveninnenseite weg, also bezüglich des kurvenaußenseitigen Fahrbahnrands nach außen. Im in Figur 3 gezeigten Fall einer Linkskurve erfährt der seitlich äußerste, hintere Punkt des linken Ausziehteils 31 der Einbaubohle 13 einen Versatz in Richtung Fahrbahnmitte. Der seitlich äußerste, hintere Punkt des rechten Ausziehteils 33 der Einbaubohle 13 erfährt einen Versatz vom Zentrum der Fahrbahn weg nach außen.

Bisher musste ein durch die Gierbewegung des Straßenfertigers 1 bei einer Kurvenfahrt verursachter Versatz der Einbaubohle 13 durch eine Bedienperson am Bohlenbedienstand 35 durch manuelle Einstellungen ausgeregelt werden. Dies erfordert die Aufmerksamkeit der Bedienperson, welche zumindest zu Beginn der Kurvenfahrt dann nicht für andere Aufgaben zur Verfügung steht. Die Bedienperson kann normalerweise nicht die Ausfahrpositionen beider Ausziehteile 31, 33 der Einbaubohle 13 gleichzeitig überprüfen und muss eines der beiden Ausziehteile 31, 33 zunächst vernachlässigen. Bei dem manuellen Ausregeln des Versatzes ist auch problematisch, dass das Ausregeln erst erfolgen kann, wenn bereits ein sichtbarer Versatz eingetreten ist. Daher entsteht auch beim Einsatz einer erfahrenen Bedienperson ein Mangel an der Fahrbahn.

Zur Illustration des Versatzes des Einbaubohle 13 bei der Kurvenfahrt ist in der rechten Position des Straßenfertigers 1 in Figur 3 die Situation eingezeichnet, dass die Ausfahrpositionen der Ausziehteile 31, 33 der Einbaubohle 13 nicht korrigiert wurden (gestrichelte Linie für die Seitenschilde 32, 34), die Ausfahrpositionen also genauso sind wie in der linken Position des Straßenfertigers 1. Zudem ist die Situation dargestellt, dass die Ausfahrpositionen beider Ausziehteile 31, 33 entsprechend korrigiert wurden (durchgezogene Linien für die Seitenschilde). Wie dargestellt, muss zur Kurvenkorrektur das kurveninnenseitige Ausziehteil 31 weiter ausgefahren werden und das kurvenaußenseitige Ausziehteil 33 eingefahren werden. Anhand von Figur 3 ergibt sich aus geometrischen Überlegungen, dass ohne Korrektur der Ausfahrposition des kurveninnenseitigen Ausziehteils 31 während der Kurvenfahrt mit dem Kurvenradius R der Abstand a des hintersten, äußersten Punktes des kurveninnenseitigen Ausziehteils 31 der Einbaubohle 13 zu der von dem Gierpunkt P durchlaufenen Kurve gemäß folgender Formel berechnet werden kann:

$$a = R - ((R-b)^2 + l^2)^{\wedge}(1/2)$$

Hierbei gibt b den Abstand zwischen dem hintersten, äußersten Punkt des kurveninnenseitigen Ausziehteils 31 und der von dem Gierpunkt P durchlaufenen Kurve vor Beginn der Kurvenfahrt und l einen Abstand zwischen dem Gierpunkt P des Straßenfertigers 1 und dem hinteren äußeren Ende des Ausziehteils 31 bezüglich der Einbaufahrtrichtung F an. l und b sind als Maschinenparameter des Straßenfertigers 1 bzw. als charakteristische Größe der einzubauenden Fahrbahndecke bekannt oder bestimmbar. Der Kurvenradius R lässt sich aus dem Lenkwinkel des Straßenfertigers 1 berechnen. Damit ergibt sich, dass das kurveninnenseitige Ausziehteil 31 der Einbaubohle 13 zur Kurvenkorrektur um einen Betrag b-a (Versatz) ausgefahren werden muss, welcher sich wie folgt ergibt:

$$b-a = b - R + ((R-b)^2 + l^2)^{\wedge}(1/2)$$

Der erfindungsgemäße Straßenfertiger 1 umfasst eine Kurvenkorrektureinheit 38 zum automatischen Korrigieren des Versatzes der Einbaubohle 13 aufgrund einer Gierbewegung bei einer Kurvenfahrt des Straßenfertigers 1. Die Kurvenkorrektureinheit 38 kann als Steuereinheit mit geeigneter Hardware ausgebildet sein und beispielsweise einen Prozessor und einen Speicher für Programmanweisungen enthalten. In der gezeigten Ausführungsform ist die Kurvenkorrektureinheit 38 an der Einbaubohle 13 vorgesehen. Es ist aber auch denkbar, dass die Kurvenkorrektureinheit 38 anderweitig am Straßenfertiger 1 vorgesehen ist oder einzelne Komponenten der Kurvenkorrektureinheit 38 über den Straßenfertiger 1 hinweg verteilt sind. Die Kurvenkorrektureinheit 38 ist dazu konfiguriert, einen einen tatsächlichen Lenkwinkel des Straßenfertigers 1 definierenden Wert zu ermitteln.

Im Falle eines Straßenfertigers 1 mit einem Kettenfahrwerk 19 kann die Differenz zwischen der Geschwindigkeit einer bezüglich der Einbaufahrtrichtung F linken Fahrkette 21 und einer Geschwindigkeit einer bezüglich der Einbaufahrtrichtung F rechten Fahrkette 21 als der den tatsächlichen Lenkwinkel des Straßenfertigers 1 definierende Wert herangezogen werden. Dieser kann beispielsweise von der Kurvenkorrektureinheit 38 über an dem Kettenfahrwerk 19 vorgesehene Sensoren 41 für die Geschwindigkeiten der Fahrketten 21 ermittelt werden. Es wäre aber auch denkbar, dass die Kurvenkorrektureinheit 38 die Differenz der Geschwindigkeiten der Fahrketten 21 aus einer Benutzereingabe zum Steuern des Straßenfertigers 1 oder einem Steuersignal zum Steuern des Kettenfahrwerks 19 des Straßenfertigers 1 erhält.

Auch denkbar ist, dass ein Wegmesssystem mit Sensoren 41 zum Bestimmen eines in einem Zeitraum von einer bezüglich der Einbaufahrtrichtung F linken Fahrkette 21 des Straßenfertigers 1 zurückgelegten Wegs und eines in dem selben Zeitraum von einer bezüglich der Einbaufahrtrichtung F rechten Fahrkette 21 des Straßenfertigers 1 zurückgelegten Wegs vorgesehen ist. Die Differenz der gemessenen Wege kann als der den tatsächlichen Lenkwinkel des Straßenfertigers 1 definierende Wert herangezogen werden.

Im Fall eines Straßenfertigers 1 mit Räderfahrwerk 23 kann der Lenkwinkel eines oder mehrerer lenkender Räder 27 als der den tatsächlichen Lenkwinkel des Straßenfertigers 1 definierende Wert herangezogen werden. Dieser kann von der Kurvenkorrektureinheit 38 über an dem Radfahrwerk 23 vorgesehen Sensoren 43 bestimmt werden oder der Kurvenkorrektureinheit 38 basierend einer Benutzereingabe zum Steuern des Straßenfertigers 1, wie beispielsweise einem Einstellwinkel eines Lenkrads 18 des Straßenfertigers 1, oder einem Steuersignal zum Steuern des Radfahrwerks 23 des Straßenfertigers 1 übermittelt werden.

Es könnten alternativ auch Sensoren 43 zum Bestimmen einer Geschwindigkeit eines bzgl. der Einbaufahrtrichtung F linken Rads 25, 27, 29 des Straßenfertigers 1 und einer Geschwindigkeit eines bzgl. der Einbaufahrtrichtung F rechten Rads 25, 27, 29 des Straßenfertigers 1 vorgesehen sein. Die Differenz der gemessenen Geschwindigkeiten der beiden Räder 25, 27, 29 kann als der den tatsächlichen Lenkwinkel des Straßenfertigers 1 definierende Wert herangezogen werden.

Auch denkbar ist, dass ein Wegmesssystem mit Sensoren 43 zum Bestimmen eines in einem Zeitraum von einem bezüglich der Einbaufahrtrichtung F linken Rad 25, 27, 29 des Straßenfertigers 1 zurückgelegten Wegs und eines in dem Zeitraum von einem bezüglich der Einbaufahrtrichtung F rechten Rad 25, 27, 29 des Straßenfertigers 1 zurückgelegten Wegs vorgesehen ist. Die Differenz der gemessenen Wege kann als der den tatsächlichen Lenkwinkel des Straßenfertigers 1 definierende Wert herangezogen werden.

Basierend auf dem den tatsächlichen Lenkwinkel des Straßenfertigers 1 definierenden Wert lässt sich der Kurvenradius R einer von dem Straßenfertiger 1 gefahrenen Kurve bestimmen. Damit lässt sich, beispielsweise anhand der obenstehenden Formeln, ein Versatz der Einbaubohle 13 berechnen, welcher aufgrund einer Gierbewegung des Straßenfertigers 1 beim Lenken mit dem von dem ermittelten Wert definierten Lenkwinkel erwartet wird. Die Kurvenkorrektureinheit 38 ist dazu konfiguriert, basierend auf dem berechneten erwarteten Versatz die seitliche Ausfahrposition zumindest eines der seitlichen Ausziehteile 31, 33 der Einbaubohle 13 automatisch zu korrigieren. Hierzu kann die Kurvenkorrektureinheit 38 einen entsprechenden Aktuator zum Bewegen des Ausziehteils 31, 33 der Einbaubohle 13 ansteuern. Es ist denkbar, dass die Kurvenkorrektureinheit 38 lediglich die Ausfahrposition eines Ausziehteils 31, 33 der Einbaubohle 13 automatisch korrigiert, beispielsweise des kurveninneren Ausziehteils 31. Vorteilhafterweise werden aber beide Ausfahrpositionen der Ausziehteile 31, 33 automatisch korrigiert.

Gemäß einer bevorzugten Ausführungsform wird lediglich berechnet, wie die Ausfahrposition eines der beiden Ausziehteile 31, 33 korrigiert werden muss. Das zweite Ausziehteil 31, 33 kann dann komplementär korrigiert werden, sodass eine Gesamtbreite der Einbaubohle 13 konstant bleibt. Wird beispielsweise das kurveninnenseitige Ausziehteil 31 um einen bestimmten Betrag ausgefahren, kann das kurvenaußenseitige Ausziehteil 33 ohne erneute Berechnung um einen identischen Betrag eingezogen werden.

Die Kurvenkorrektureinheit 38 kann dazu konfiguriert sein, das Ermitteln des den tatsächlichen Lenkwinkel des Straßenfertigers 1 definierenden Werts, das Berechnen des erwarteten Versatzes und das Korrigieren der seitlichen Ausfahrposition in regelmäßen zeitlichen Intervallen durchzuführen, insbesondere in Intervallen von weniger als 1 s, weniger als 10 s, weniger als 20 s oder weniger als 30 s.

**Patentansprüche**

1.  Verfahren zum Betrieb eines Straßenfertigers (1), welches das Einbauen eines Fahrbahnbelags mit dem Straßenfertiger (1) entlang eines Planums umfasst, wobei eine zumindest ein seitliches Ausziehteil (31, 33) umfassende Einbaubohle (13) des Straßenfertigers (1) zum Verdichten des Fahrbahnbelags entlang einer Einbaufahrtrichtung (F) über das Planum gezogen wird,
**dadurch gekennzeichnet, dass**
mittels einer Kurvenkorrektureinheit (38) die folgenden Schritte durchgeführt werden:

> Ermitteln eines einen tatsächlichen Lenkwinkel des Straßenfertigers (1) definierenden Werts; Berechnen eines erwarteten Versatzes der Einbaubohle (13), welcher aufgrund einer Gierbewegung des Straßenfertigers (1) beim Lenken mit dem von dem ermittelten Wert definierten Lenkwinkel vorliegt, basierend auf dem ermittelten Wert; und
> automatisches Korrigieren einer seitlichen Ausfahrposition des zumindest einen seitlichen Ausziehteils (31, 33) der Einbaubohle (13) basierend auf dem erwarteten Versatz, so dass der Versatz ausgeglichen wird.

2. Verfahren nach Anspruch 1, wobei der den tatsächlichen Lenkwinkel des Straßenfertigers (1) definierende Wert ein Lenkwinkel eines oder mehrerer lenkender Räder (27), insbesondere lenkender Vorderräder, des Straßenfertigers (1) oder eine eingestellte Lenkradstellung des Straßenfertigers (1) ist.

3. Verfahren nach Anspruch 1, wobei der den tatsächlichen Lenkwinkel des Straßenfertigers (1) definierende Wert entweder eine Differenz zwischen einer Geschwindigkeit einer bezüglich der Einbaufahrtrichtung (F) linken Fahrkette (21) des Straßenfertigers (1) und einer Geschwindigkeit einer bezüglich der Einbaufahrtrichtung (F) rechten Fahrkette (21) des Straßenfertigers (1) oder eine Differenz zwischen einer Geschwindigkeit eines bezüglich der Einbaufahrtrichtung (F) linken Rads (25, 27, 29) des Straßenfertigers (1) und einer Geschwindigkeit eines bezüglich der Einbaufahrtrichtung (F) rechten Rads (25, 27, 29) des Straßenfertigers (1) ist.

4. Verfahren nach Anspruch 1, wobei der den tatsächlichen Lenkwinkel des Straßenfertigers (1) definierende Wert entweder eine Differenz zwischen einem in einem Zeitraum von einem bezüglich der Einbaufahrtrichtung linken Rad (25, 27, 29) des Straßenfertigers (1) zurückgelegten Weg und einem in dem Zeitraum von einem bezüglich der Einbaufahrtrichtung rechten Rad (25, 27, 29) des Straßenfertigers (1) zurückgelegten Weg oder eine Differenz zwischen einem in einem Zeitraum von einer bezüglich der Einbaufahrtrichtung linken Fahrkette (21) des Straßenfertigers (1) zurückgelegten Weg und einem in dem Zeitraum von einer bezüglich der Einbaufahrtrichtung rechten Fahrkette (21) des Straßenfertigers (1) zurückgelegten Weg ist.

5. Verfahren nach einem der vorangehenden Ansprüche, wobei der den tatsächlichen Lenkwinkel des Straßenfertigers (1) definierende Wert mit einer Sensoreinheit (41, 43) des Straßenfertigers (1) gemessen wird oder aus einem mit einer Sensoreinheit (41, 43) des Straßenfertigers (1) gemessenen Messwert berechnet wird.

6. Verfahren nach einem der vorangehenden Ansprüche, wobei der den tatsächlichen Lenkwinkel des Straßenfertigers (1) definierende Wert aus einer Benutzereingabe zum Steuern des Straßenfertigers oder einem Steuersignal zum Steuern eines Fahrwerks (19, 23) des Straßenfertigers (1) erhalten wird und/oder direkt als Benutzereingabe eingegeben wird.

7. Verfahren nach einem der vorangehenden Ansprüche, wobei basierend auf dem erwarteten Versatz sowohl eine seitliche Ausfahrposition eines bezüglich der Einbaufahrtrichtung (F) des Straßenfertigers (1) rechten Ausziehteils (33) der Einbaubohle (13) als auch eine seitliche Ausfahrposition eines bezüglich der Einbaufahrtrichtung (F) des Straßenfertigers (1) linken Ausziehteils (31) der Einbaubohle (13) korrigiert wird, wobei die Korrektur der seitlichen Ausfahrposition des rechten Ausziehteils (33) und die Korrektur der seitlichen Ausfahrposition des linken Ausziehteils (31) insbesondere derart durchgeführt werden, dass sich diese so zu Null ausgleichen, dass eine Gesamtbreite der Einbaubohle (13) konstant bleibt.

8. Verfahren nach einem der vorangehenden Ansprüche, wobei das Ermitteln des den tatsächlichen Lenkwinkel des Straßenfertigers (1) definierenden Werts, das Berechnen des erwarteten Versatzes und das Korrigieren der seitlichen Ausfahrposition in regelmäßigen zeitlichen Intervallen durchgeführt wird, insbesondere in Intervallen von weniger als 1 s, weniger als 10 s, weniger als 20 s oder weniger als 30 s.

9. Straßenfertiger (1) mit
einem bezüglich einer Einbaufahrtrichtung (F) vorne am Straßenfertiger (1) gelegenen Gutbunker (3) zur Aufnahme von Einbaugut; und
einer bezüglich der Einbaufahrtrichtung (F) hinten am Straßenfertiger (1) vorgesehenen Einbaubohle (13) zum Verdichten von Einbaugut, wobei die Einbaubohle (13) zumindest ein seitliches Ausziehteil (31, 33) umfasst,
**gekennzeichnet durch**
eine Kurvenkorrektureinheit (38), die dazu konfiguriert ist,

einen einen tatsächlichen Lenkwinkel des Straßenfertigers (1) definierenden Wert zu ermitteln; einen erwarteten Versatz der Einbaubohle (13), welcher aufgrund einer Gierbewegung des Straßenfertigers (1) beim Lenken mit dem von dem ermittelten Wert definierten Lenkwinkel vorliegt, basierend auf dem ermittelten Wert zu berechnen; und eine seitliche Ausfahrposition des zumindest einen seitlichen Ausziehteils (31, 33) der Einbaubohle (13) basierend auf dem erwarteten Versatz automatisch zu korrigieren, so dass der Versatz ausgeglichen wird.

10. Straßenfertiger nach Anspruch 9, wobei der den tatsächlichen Lenkwinkel des Straßenfertigers (1) definierende Wert ein Lenkwinkel eines oder mehrerer lenkender Räder (27), insbesondere lenkender Vorderräder, des Straßenfertigers (1), eine eingestellte Lenkradstellung des Straßenfertigers (1), eine Differenz zwischen einer Geschwindigkeit einer bezüglich der Einbaufahrtrichtung (F) linken Fahrkette (21) des Straßenfertigers (1) und einer Geschwindigkeit einer bezüglich der Einbaufahrtrichtung (F) rechten Fahrkette (21) des Straßenfertigers (1), oder eine Differenz zwischen einer Geschwindigkeit eines bezüglich der Einbaufahrtrichtung (F) linken Rads (25, 27, 29) des Straßenfertigers (1) und einer Geschwindigkeit eines bezüglich der Einbaufahrtrichtung (F) rechten Rads (25, 27, 29) des Straßenfertigers (1) ist.

11. Straßenfertiger nach Anspruch 9, wobei der den tatsächlichen Lenkwinkel des Straßenfertigers (1) definierende Wert entweder eine Differenz zwischen einem in einem Zeitraum von einem bezüglich der Einbaufahrtrichtung linken Rad (25, 27, 29) des Straßenfertigers (1) zurückgelegten Weg und einem in dem Zeitraum von einem bezüglich der Einbaufahrtrichtung rechten Rad (25, 27, 29) des Straßenfertigers (1) zurückgelegten Weg oder eine Differenz zwischen einem in einem Zeitraum von einer bezüglich der Einbaufahrtrichtung linken Fahrkette (21) des Straßenfertigers (1) zurückgelegten Weg und einem in dem Zeitraum von einer bezüglich der Einbaufahrtrichtung rechten Fahrkette (21) des Straßenfertigers (1) zurückgelegten Weg ist.

12. Straßenfertiger nach einem der Ansprüche 9 bis 11, wobei der Straßenfertiger (1) zudem eine Sensoreinheit (41, 43) umfasst, die dazu konfiguriert ist, den den tatsächlichen Lenkwinkel des Straßenfertigers (1) definierenden Wert oder einen Messwert, aus dem sich der den tatsächlichen Lenkwinkel des Straßenfertigers (1) definierende Wert berechnen lässt, zu messen.

13. Straßenfertiger nach einem der Ansprüche 9 bis 12, wobei die Kurvenkorrektureinheit (38) dazu konfiguriert ist, den den tatsächlichen Lenkwinkel des Straßenfertigers (1) definierenden Wert aus einer Benutzereingabe zum Steuern des Straßenfertigers (1), aus einer direkten Benutzereingabe des den tatsächlichen Lenkwinkel des Straßenfertigers (1) definierenden Werts, oder aus einem Steuersignal zum Steuern eines Fahrwerks (19, 23) des Straßenfertigers (1) zu erhalten.

14. Straßenfertiger nach einem der Ansprüche 9 bis 13, wobei die Kurvenkorrektureinheit (38) dazu konfiguriert ist, basierend auf dem erwarteten Versatz sowohl eine seitliche Ausfahrposition eines bezüglich der Einbaufahrtrichtung (F) des Straßenfertigers (1) rechten Ausziehteils (33) der Einbaubohle (13) als auch eine seitliche Ausfahrposition eines bezüglich der Einbaufahrtrichtung (F) des Straßenfertigers (1) linken Ausziehteils (31) der Einbaubohle (13) zu korrigieren, wobei die Kurvenkorrektureinheit (38) insbesondere dazu konfiguriert ist, die Korrektur der seitlichen Ausfahrposition des rechten Ausziehteils (33) und die Korrektur der seitlichen Ausfahrposition des linken Ausziehteils (31) derart durchzuführen, dass sich diese derart zu Null ausgleichen, dass eine Gesamtbreite der Einbaubohle (13) konstant bleibt.

15. Straßenfertiger nach einem der Ansprüche 9 bis 14, wobei die Kurvenkorrektureinheit (38) dazu konfiguriert ist, das Ermitteln des den Lenkwinkel des Straßenfertigers (1) definierenden Werts, das Berechnen des erwarteten Versatzes und das Korrigieren der seitlichen Ausfahrposition in regelmäßigen zeitlichen Intervallen durchzuführen, insbesondere in Intervallen von weniger als 1 s, weniger als 10 s, weniger als 20 s oder weniger als 30 s.

**Claims**

1. A method for operating a road paver (1) comprising paving a road surface with the road paver (1) along a road bed, wherein a paving screed (13) of the road paver (1) having at least one lateral extension part (31, 33) is pulled over the road bed along a paving direction of travel (F) to compact the road surface, **characterized in that** the following steps are carried out by means of a curve correction unit (38):

   determining a value defining an actual steering angle of the road paver (1); based on the determined value calculating an expected offset of the paving screed (13) which results from a yawing movement of the paver (1) during steering with the steering angle defined by the determined value; and automatically correcting a lateral extension position of the at least one lateral extension part (31, 33) of the paving screed (13) based on the expected offset so that the offset is compensated.

2. Method according to claim 1, wherein the value defining the actual steering angle of the road paver (1) is a steering angle of one or more steered wheels (27), in particular steered front wheels, of the road paver (1) or a set position of a steering wheel of the road paver (1).

3. Method according to claim 1, wherein the value defining the actual steering angle of the road paver (1) is either a difference between a speed of a track (21) of the road paver (1) on the left-hand side with respect to the paving direction of travel (F) and a speed of a track (21) of the road paver (1) on the right-hand side with respect to the paving direction of travel (F) or a difference between a speed of a wheel (25, 28, 29) of the road paver (1) on the left-hand side with respect to the paving direction of travel (F) and a speed of a wheel (25, 27, 29) of the road paver (1) on the right-hand side with respect to the paving direction of travel (F).

4. Method according to claim 1, wherein the value defining the actual steering angle of the road paver (1) is either a difference between a distance covered in a period of time by a wheel (25, 27, 29) of the road paver on the left-hand side with respect to the paving direction of travel, and a distance covered in the period of time by a wheel (25, 27, 29) of the road paver (1) on the right-hand side with respect to the paving direction of travel, or a difference between a path covered in a period of time by a track (21) of the road paver (1) on the left-hand side with respect to the paving direction of travel and a path covered in the period of time by a track (21) of the road paver (1) on the right-hand side with respect to the paving direction of travel.

5. Method according to any one of the preceding claims, wherein the value defining the actual steering angle of the road paver (1) is measured with a sensor unit (41, 43) of the road paver (1) or is calculated from a measured value measured with a sensor unit (41, 43) of the road paver (1).

6. Method according to any one of the preceding claims, wherein the value defining the actual steering angle of the road paver (1) is obtained from a user input for controlling the road paver (1) or from a control signal for controlling a drive (19, 23) of the road paver (1) and/or wherein the value defining the steering angle of the road paver (1) is directly entered as user input.

7. Method according to any one of the preceding claims, wherein, based on the expected offset, both a lateral extension position of an extension part (33) of the paving screed (13) which is on the right-hand side with respect to the direction of travel (F) of the road paver (1) and a lateral extension position of an extension part (31) of the paving screed (13) which is on the left-hand side with respect to the direction of travel (F) of the road paver (1) are corrected, the correction of the lateral extension position of the right extension part (33) and the correction of the lateral extension position of the left extension part (31) in particular being balanced to zero in such a way that an overall width of the paving screed (13) remains constant.

8. Method according to any one of the preceding claims, wherein determining the value defining the actual steering angle of the road paver (1), calculating the expected offset and correcting the lateral extension position being carried out at regular time intervals, in particular at intervals of less than 1 s, less than 10 s, less than 20 s or less than 30 s.

9. Road paver (1) comprising
a material bunker (3) for receiving paving material located at a front of the road paver (1) with respect to a paving direction of travel (F); and
a paving screed (13) for compacting the paving material provided at a rear of the paver (1) with respect to the paving direction of travel (F), wherein the paving screed (13) comprises at least one lateral extension part (31, 33),
**characterised by**
a curve correction unit (38) configured
to determine a value defining an actual steering angle of the road paver (1);
to calculate based on the determined value an expected offset of the paving screed (13), which is due to a yawing movement of the paver (1) during steering with the steering angle defined by the determined value; and
to automatically correct a lateral extension position of the at least one lateral extension part (31, 33) of the paving screed (13) based on the expected offset so that the offset is compensated.

10. Road paver according to claim 9, wherein the value defining the actual steering angle of the road paver (1) comprises a steering angle of one or more steered wheels (27), in particular steered front wheels, of the road paver (1), a set position of a steering wheel of the road paver (1), a difference between a speed of a track (21) of the road paver (1) on the left-hand side with respect to the paving direction of travel (F) and a speed of a track (21) of the road paver (1) on the right-hand side with respect to the paving direction of travel (F), or a difference between a speed of a wheel (25, 27, 29) of the road paver (1) on a left-hand side with respect to the paving direction of travel (F) and a speed of a wheel (25, 27, 29) of the road paver (1) on a right-hand side with respect to the paving direction of travel (F).

11. Road paver according to claim 9, wherein the value defining the actual steering angle of the road paver (1) is either a difference between a distance covered in a period of time by a wheel (25, 27, 29) of the road paver on the left-hand side with respect to the paving direction of travel and a distance covered in the period of time by a wheel (25, 27, 29) of the road paver (1) on the right-hand side with respect to the paving direction of travel, or a difference between a distance covered in a period of time by a track (21) of the road paver (1) on the left-hand side with respect to the paving direction of travel and a distance covered in the period of time by a track (21) of the road paver (1) on the right-hand side with respect to the paving direction of travel.

12. Road paver according to any one of claims 9 to 11, wherein the road paver (1) further comprises a sensor unit (41, 43) configured to measure the value defining the actual steering angle of the road paver (1) or a measured value from which the value defining the actual steering angle of the road paver (1) can be calculated.

13. Road paver according to any one of claims 9 to 12, wherein the curve correction unit (38) is configured to obtain the value defining the actual steering angle of the road paver (1) from a user input for controlling the road paver (1), from a direct user input of the value defining the actual steering angle of the road paver (1), or from a control signal for controlling a drive (19, 23) of the road paver (1).

14. Road paver according to any one of claims 9 to 13, wherein the curve correction unit (38) is configured to correct based on the expected offset, both a lateral extension position of an extension part (33) of the paving screed (13) which is on the right-hand side relative to the direction of travel (F) of the road paver (1) and a lateral extension position of an extension part (31) of the paving screed (13) which is on the left-hand side relative to the direction of travel (F) of the road paver (1), the curve correction unit (38) being configured in particular to correct the lateral extension position of the right extension part (33) and to correct the lateral extension position of the left extension part (31) in such a way that they balance out to zero in such a way that an overall width of the paving screed (13) remains constant.

15. Road paver according to any one of claims 9 to 14, wherein the curve correction unit (38) is configured to determine the value defining the steering angle of the road paver (1), to calculate the expected offset and to correct the lateral extension position at regular time intervals, in particular at intervals of less than 1 s, less than 10 s, less than 20 s or less than 30 s.

## Revendications

1. Procédé pour assurer le fonctionnement d'un finisseur de route (1), comprenant la pose d'un revêtement de chaussée à l'aide du finisseur de route (1) le long d'une plateforme de voie, une table de pose et de lissage (13) du finisseur de route (1), qui comporte au moins une partie latérale extractible (31, 33), étant tirée par -dessus la plateforme de voie le long d'une direction de marche (F) de pose de revêtement, pour lisser et compacter le revêtement de chaussée,
   **caractérisé en ce qu'**à l'aide d'une unité de correction de courbe (38), on effectue les étapes suivantes :

   la détermination d'une valeur définissant un angle de braquage effectif du finisseur de route (1) ;
   le calcul, en se basant sur la valeur ayant été déterminée, d'un décalage attendu de la table de pose et de lissage (13), qui est donné en raison d'un mouvement de lacet du finisseur de route (1) lors du braquage avec l'angle de braquage défini par ladite valeur ayant été déterminée ; et
   la correction automatique d'une position d'extraction latérale de ladite au moins une partie latérale extractible (31, 33) de la table de pose et de lissage (13), en se basant sur le décalage attendu, de manière à compenser le décalage.

2. Procédé selon la revendication 1, d'après lequel la valeur définissant l'angle de braquage effectif du finisseur de route (1), est un angle de braquage d'une ou de plusieurs roues directionnelles (27), notamment de roues directionnelles avant, du finisseur de route (1), ou bien une position de roue directionnelle, réglée, du finisseur de route (1).

3. Procédé selon la revendication 1, d'après lequel la valeur définissant l'angle de braquage effectif du finisseur de route (1), est soit une différence entre une vitesse d'une chenille de circulation (21) du finisseur de route (1) située à gauche en se référant à la direction de marche (F) de la pose de revêtement, et une vitesse d'une chenille de circulation (21) du finisseur de route (1) située à droite en se référant à la direction de marche (F) de la pose de revêtement, soit une différence entre une vitesse d'une roue (25, 27, 29) du finisseur de route (1) située à gauche en se référant à la direction de marche (F) de la pose de revêtement, et une vitesse d'une roue (25, 27, 29) du finisseur de route (1) située à droite en se référant à la direction de marche (F) de la pose de revêtement.

4. Procédé selon la revendication 1, d'après lequel la valeur définissant l'angle de braquage effectif du finisseur de route (1), est soit une différence entre un chemin parcouru dans un intervalle de temps par une roue (25, 27, 29) du finisseur de route (1) située à gauche en se référant à la direction de marche de la pose de revêtement, et un chemin parcouru dans l'intervalle de temps par une roue (25, 27, 29) du finisseur de route (1) située à droite en se référant à la direction de marche de la pose de revêtement, soit une différence entre un chemin parcouru dans un intervalle de temps par une chenille de circulation (21) du finisseur de route (1) située à gauche en se référant à la direction de marche de la pose de revêtement, et un chemin parcouru dans l'intervalle de temps par une chenille de circulation (21) du finisseur de route (1) située à droite en se référant à la direction de marche de la pose de revêtement.

5. Procédé selon l'une des revendications précédentes, d'après lequel la valeur définissant l'angle de braquage effectif du finisseur de route (1), est mesurée à l'aide d'une unité de capteur (41, 43) du finisseur de route (1), ou bien est calculée à partir d'une valeur de mesure mesurée par une unité de capteur (41, 43) du finisseur de route (1).

6. Procédé selon l'une des revendications précédentes, d'après lequel la valeur définissant l'angle de braquage effectif du finisseur de route (1), est obtenue à partir d'une saisie-utilisateur pour commander le finisseur de route, ou d'un signal de commande pour commander le train de roulement (19, 23) du finisseur de route (1), et/ou est introduite directement en tant que saisie-utilisateur.

7. Procédé selon l'une des revendications précédentes, d'après lequel en se basant sur le décalage prévu, on corrige aussi bien une position d'extraction latérale d'une partie extractible (33) de la table de pose et de lissage (13), située à droite en se référant à la direction de marche (F) de la pose de revêtement du finisseur de route (1), qu'une position d'extraction latérale d'une partie extractible (31) de la table de pose et de lissage (13), située à gauche en se référant à la direction de marche (F) de la pose de revêtement du finisseur de route (1), et d'après lequel la correction de la position d'extraction latérale de la partie extractible droite (33) et la correction de la position d'extraction latérale de la partie extractible gauche (31) sont effectuées notamment de manière telle, que celles-ci se compensent réciproquement à zéro de façon à ce que la largeur totale de la table de pose et de lissage (13) reste constante.

8. Procédé selon l'une des revendications précédentes, d'après lequel la détermination de la valeur définissant l'angle de braquage effectif du finisseur de route (1), le calcul du décalage attendu et la correction de la position d'extraction latérale, sont effectués selon des intervalles de temps réguliers, notamment selon des intervalles de moins de 1 s, de moins de 10 s, de moins de 20 s ou de moins de 30s.

9. Finisseur de route (1) comprenant une trémie à matériau (3) destinée à recevoir du matériau de revêtement à poser et placée à l'avant du finisseur de route (1) en se référant à la direction de marche (F) de la pose de revêtement ;
une table de pose et de lissage (13) destinée à compacter et lisser du matériau de revêtement et prévue à l'arrière du finisseur de route (1) en se référant à la direction de marche (F) de la pose de revêtement, la table de pose et de lissage (13) comprenant au moins une partie latérale extractible (31, 33), **caractérisé par** une unité de correction de courbe (38), qui est configurée pour
déterminer une valeur définissant un angle de braquage effectif du finisseur de route (1) ;
calculer un décalage attendu de la table de pose et de lissage (13), qui est donné en raison d'un mouvement de lacet du finisseur de route (1) lors du braquage avec l'angle de braquage défini par ladite valeur ayant été déterminée ; et
corriger automatiquement une position d'extraction latérale de ladite au moins une partie latérale extractible (31, 33) de la table de pose et de lissage (13), en se basant sur le décalage attendu, de manière à compenser le décalage.

10. Finisseur de route selon la revendication 9, dans lequel la valeur définissant l'angle de braquage effectif du finisseur de route (1), est un angle de braquage d'une ou de plusieurs roues directionnelles (27), notamment de roues directionnelles avant, du finisseur de route (1), une position de roue directionnelle, réglée, du finisseur de route (1), une différence entre une vitesse d'une chenille de circulation (21) du finisseur de route (1) située à gauche en se référant à la direction de marche (F) de la pose de revêtement, et une vitesse d'une chenille de circulation (21) du finisseur de route (1) située à droite en se référant à la direction de marche (F) de la pose de revêtement, ou bien une différence entre une vitesse d'une roue (25, 27, 29) du finisseur de route (1) située à gauche en se référant à la direction de marche (F) de la pose de revêtement, et une vitesse d'une roue (25, 27, 29) du finisseur de route (1) située à droite en se référant à la direction de marche (F) de la pose de revêtement.

**11.** Finisseur de route selon la revendication 9, dans lequel la valeur définissant l'angle de braquage effectif du finisseur de route (1), est soit une différence entre un chemin parcouru dans un intervalle de temps par une roue (25, 27, 29) du finisseur de route (1) située à gauche en se référant à la direction de marche de la pose de revêtement, et un chemin parcouru dans l'intervalle de temps par une roue (25, 27, 29) du finisseur de route (1) située à droite en se référant à la direction de marche de la pose de revêtement, soit une différence entre un chemin parcouru dans un intervalle de temps par une chenille de circulation (21) du finisseur de route (1) située à gauche en se référant à la direction de marche de la pose de revêtement, et un chemin parcouru dans l'intervalle de temps par une chenille de circulation (21) du finisseur de route (1) située à droite en se référant à la direction de marche de la pose de revêtement.

**12.** Finisseur de route selon l'une des revendications 9 à 11, le finisseur de route (1) comprenant en outre une unité de capteur (41, 43), qui est configurée pour mesurer la valeur définissant l'angle de braquage effectif du finisseur de route (1), ou une valeur de mesure à partir de laquelle peut être calculée la valeur définissant l'angle de braquage effectif du finisseur de route (1).

**13.** Finisseur de route selon l'une des revendications 9 à 12, dans lequel l'unité de correction de courbe (38) est configurée pour obtenir la valeur définissant l'angle de braquage effectif du finisseur de route (1), à partir d'une saisie-utilisateur pour commander le finisseur de route (1), à partir d'une saisie-utilisateur directe de la valeur définissant l'angle de braquage effectif du finisseur de route (1), ou à partir d'un signal de commande pour commander un train de roulement (19, 23) du finisseur de route (1).

**14.** Finisseur de route selon l'une des revendications 9 à 13, dans lequel l'unité de correction de courbe (38) est configurée pour corriger, en se basant sur le décalage attendu, aussi bien une position d'extraction latérale d'une partie extractible (33) de la table de pose et de lissage (13), située à droite en se référant à la direction de marche (F) de la pose de revêtement du finisseur de route (1), qu'une position d'extraction latérale d'une partie extractible (31) de la table de pose et de lissage (13), située à gauche en se référant à la direction de marche (F) de la pose de revêtement du finisseur de route (1), l'unité de correction de courbe (38) étant notamment configurée pour effectuer la correction de la position d'extraction latérale de la partie extractible droite (33) et la correction de la position d'extraction latérale de la partie extractible gauche (31) de manière telle, que celles-ci se compensent réciproquement à zéro de façon à ce que la largeur totale de la table de pose et de lissage (13) reste constante.

**15.** Finisseur de route selon l'une des revendications 9 à 14, dans lequel l'unité de correction de courbe (38) est configurée pour effectuer la détermination de la valeur définissant l'angle de braquage effectif du finisseur de route (1), le calcul du décalage attendu et la correction de la position d'extraction latérale, selon des intervalles de temps réguliers, notamment selon des intervalles de moins de 1 s, de moins de 10 s, de moins de 20 s ou de moins de 30s.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3106562 A1
- EP 0620319 B1